# EUROPEAN PATENT APPLICATION

(11) **EP 1 065 000 A1**
(43) Date of publication of application: **03.01.2001**
(21) Application number: 99944859.0
(22) Date of filing: 28.09.1999
(51) Int. Cl.: B01J 38/12, B01J 38/48, B01J 38/60, B01J 23/94, C10G 45/04

(54) **METHOD OF REGENERATING HYDROGENATION CATALYST**

(30) Priority: 29.09.1998 JP 27507998
(71) Applicant: Idemitsu Kosan Co., Ltd., Tokyo 100-0005 (JP)
(72) Inventor: IWAMOTO, Ryuichiro, Sodegaura-shi, Chiba 299-0293 (JP); NOZAKI, Takao, Sodegaura-shi, Chib a 299-0293 (JP)
(74) Representative: Gille Hrabal Struck Neidlein Prop Roos
(86) International application number: JP9905282
(87) International publication number: WO0018508

(57) **Abstract**

Provided is a method of regenerating used hydrogenation catalysts, which comprises calcining used hydrogenation catalysts, followed by subjecting them to treatment for removing metallic deposits from them. For the treatment, for example, the calcined catalysts are washed with water. The method is effective for recycling catalysts having been used for hydrogenation of hydrocarbon oils.

## Description

### TECHNICAL FIELD

The present invention relates to a method of regenerating catalysts for hydrogenation of hydrocarbon oils. More precisely, it relates to a method of regenerating catalysts having been used for hydrogenation of hydrocarbon oils, which comprises calcining the used catalysts followed by washing them with water.

### BACKGROUND ART

For petroleum purification, there are many methods of purifying different fractions through hydrogenation. For example, they include desulfurization and denitrogenation of naphtha, kerosene, gas oil, etc.; desulfurization, denitrogenation and cracking of heavy gas oil; and desulfurization, denitrogenation and cracking of residual oil and fuel oil, and metal removal from them. Of those, the catalysts used for hydrogenating naphtha, kerosene and gas oil all having a relatively low boiling point and containing few metal impurities such as vanadium and others are degraded only a little.

The catalysts used for hydrogenating them will be degraded almost exclusively by a small amount of carbonaceous material having deposited thereon. Therefore, the used catalysts could be regenerated and reused if the carbonaceous deposits could be removed from them, for example, by burning away the deposits. Removing the carbonaceous deposits to regenerate the used catalysts into reusable ones does not require any severe combustion control, as the amount of the deposits is small. Even when once used, some used catalysts will be degraded only a little and could be directly reused as they are. Therefore, the catalysts of that type could be used repeatedly for treating naphtha, kerosene, gas oil and the like, not requiring any specific care.

Recently, hydrogenation catalysts for heavy gas oil and vacuum gas oil have been reused through regeneration or the like, and some methods for regenerating and reusing them have been established. For example, it is known that, in the hydrocracking process for heavy gas oil, both the hydrocracking catalyst and the hydro-denitrogenation catalyst for the pretreatment can be regenerated and reused through hydrogen activation or oxygen activation.

On the catalysts used for hydrogenation of these petroleum distillates, few oil-derived metals such as vanadium and the like deposit, since the distillates contain few metal impurities. In addition, the amount of the carbonaceous material that may deposit on the used catalysts is small and the carbonaceous deposits could be readily burned away. While the catalysts with such carbonaceous deposits thereon are regenerated by calcining them, their surfaces will not be heated up to so high temperatures, and the pore structure of the calcined catalysts and even the condition thereof to carry the active metal phase therein will change little. Therefore, the regenerated catalysts could be reused with no difficulty for treating petroleum distillates such as heavy gas oil, vacuum gas oil and others (Studies in Surface and Catalysis, Vol. 88, p. 199, 1994).

However, in hydrogenation of residual oil having a higher boiling point or of heavy oil containing undistillable fractions, a large amount of metallic material and carbonaceous material deposits on the used catalysts, since the oil to be processed contains a large amount of metal impurities and easily-carbonizing substances such as asphaltene, etc. In addition, from the viewpoint of their quality, the used catalysts having metallic deposits and carbonaceous deposits thereon could not be easily regenerated to remove the deposits therefrom by calcining them (Catal. Today, Vol. 17, No. 4, p. 539, 1993; Catal. Rev. Sci. Eng., 33 (3 & 4), p. 281, 1991).

In particular, used catalysts having metallic deposits of vanadium and others thereon are difficult to reactivate by removing the deposits from them. Some reports have been published for solving the problem, suggesting extraction with oxalic acid (USP 3020239), extraction with alcohol (Japanese Patent Laid-Open No. 190241/1985), extraction with chlorine (Japanese Patent Laid-Open No. 101794/1979), etc. However, these methods have all problems in point of their operability, as requiring special chemicals and long-sustained extraction. In addition, there is still another problem with them. Active metal components such as molybdenum (Mo) and others that are generally used in hydrogenation catalysts are extracted away or are changed through the treatment according to the methods, whereby the catalysts themselves are degraded. For these reasons, those used catalysts have heretofore been discarded without being recycled.

Japanese Patent Publication No. 43704/1992 discloses a technique for regenerating used catalysts, which comprises washing used catalysts with a solvent to thereby remove oil from them, then further washing them with diluted sulfuric acid, and calcining them. In this method, however, diluted sulfuric acid could not be well contacted with the deposited metals such as vanadium and others owing to the coke deposits already existing on the surface of the used catalysts. In addition, vanadium is more readily soluble in water when it is in the form of oxides. For these reasons, the method could not fully regenerate used catalysts. Taking the matters into consideration, we have reached an invention for regenerating used catalysts, which comprises first calcining used catalysts so as to remove the coke deposits from them and to fully oxidize vanadium having deposited on them, and thereafter removing the metallic deposits from them.

The present invention is to provide a method of regenerating hydrogenation catalysts having been used for hydrogenation of heavy oil and others and therefore having been deactivated by carbonaceous deposits and metallic deposits including vanadium and others on them, to thereby effectively recycle the regenerated catalysts.

### DISCLOSURE OF THE INVENTION

We, the present inventors have assiduously studied, and, as a result, have found that, when a catalyst having been used and therefore deactivated in a process of hydrogenation of heavy oil and others is calcined outside the process and then subjected to treatment for removing metallic deposits from it, then the thus-regenerated catalyst can be reused for hydrogenation. On the basis of this finding, we have completed the present invention relating to a method of regenerating used hydrogenation catalysts.

Specifically, the summary of the invention is as follows:
1. A method of regenerating hydrogenation catalysts having been used in a process of hydrogenating hydrocarbon oils, which comprises calcining the used catalysts, followed by subjecting them to treatment for removing metallic deposits from them.
2. The method of regenerating used hydrogenation catalysts of above 1, which comprises calcining them outside the hydrogenation process, followed by subjecting them to the metallic deposit removal treatment.
3. The method of regenerating used hydrogenation catalysts of above 1, in which the metallic deposit removal treatment is for removing vanadium and/or nickel from the calcined catalysts.
4. The method of regenerating used hydrogenation catalysts of above 1, in which the calcined catalysts are washed with water for the metallic deposit removal treatment.
5. The method of regenerating used hydrogenation catalysts of above 4, in which the temperature of water for the washing treatment is not lower than 15°C.
6. The method of regenerating used hydrogenation catalysts of above 4, in which the pH of water for the washing treatment falls between 1 and 11.
7. The method of regenerating used hydrogenation catalysts of above 6, in which the pH of water for the washing treatment is controlled by acid or alkali.
8. The method of regenerating used hydrogenation catalysts of above 7, in which the acid is sulfuric acid.
9. The method of regenerating used hydrogenation catalysts of above 1, in which the calcined catalysts are agitated in a washing liquid for the metallic deposit removal treatment.
10. The method of regenerating used hydrogenation catalysts of above 9, in which the washing treatment with agitation is conducted by a bubbling wash.
11. The method of regenerating used hydrogenation catalysts of above 9, in which the agitation is conducted by ultrasonic waves.
12. The method of regenerating used hydrogenation catalysts of above 3, in which the amount of water to be applied to the calcined catalysts for washing them falls between 2 and 500 liters/kg of the catalysts.
13. The method of regenerating used hydrogenation catalysts of above 1, in which the used catalysts are calcined at a temperature falling between 350 and 700°C.
14. A method of hydrogenating hydrocarbon oils, in which are used the hydrogenation catalysts having been regenerated according to the method of any of above 1 to 13.

### BEST MODES OF CARRYING OUT THE INVENTION

Embodiments of carrying out the invention are described below.

The invention is to regenerate hydrogenation catalysts having been used for hydrogenating hydrocarbon oils, and to reuse the thus-regenerated catalysts. The hydrogenation catalysts to which the invention is directed are catalysts for hydrogenation of hydrocarbon oils, essentially for heavy oil. They are for a generic term for catalysts for hydrogenation of petroleum fractions (essentially residual oil) and others that contain metallic impurities of vanadium (V), nickel (Ni) and others, and include catalysts for hydro-desulfurization, hydro-demetallization (metal removal through hydrogenation), hydro-denitrogenation, hydrocracking, removal of aromatic residues through hydrogenation, etc. The used hydrogenation catalysts are those having been used for hydrogenation as above with the result that their catalytic activity is lowered to be useless for the intended hydrogenation as they are, and, even if used, they could no more attain satisfactory results. The used catalysts shall have carbonaceous deposits and metallic deposits (essentially of vanadium and nickel) thereon, and the deposits essentially cause the catalytic activity decrease. Metallic ingredients naturally carried on the catalysts as the active components are not metallic deposits (they are supported metals).

In the invention, used hydrogenation catalysts such as those mentioned above are calcined and then subjected to treatment for removing metallic deposits from them. For the treatment, for example, they are washed with water. Having been thus processed, the regenerated catalysts recover their activity for hydrogenation, and can be reused. The most important matter in the invention is that the used catalysts are first calcined and then subjected to metallic deposit removal treatment of, for example, washing them with water. In the calcining step, carbonaceous deposits on the catalysts are essentially removed.. In addition, it is believed that, in that calcining step, metallic materials of vanadium and others having deposited on the catalysts through hydrogenation could be converted into easily removable ones for the next treatment of, for example, washing the calcined catalysts with water. The calcined catalysts on which the carbonaceous deposits have been thus reduced and the metallic deposits have been thus converted into easily removable ones are then subjected to the next step of washing them with water or the like, whereby the metallic deposits of vanadium, nickel and others on them are removed. Regenerating used catalysts only by calcining them or by washing them with oxalic acid or alcohol could not produce satisfactorily regenerated catalysts. The special matter to be taken into consideration for the invention is that the active metallic components (for example, molybdenum, etc.) which the catalysts originally carry should not be removed or changed as much as possible. Concretely, it is desirable that the catalysts are once taken out of the process where they are used, and then regenerated for themselves outside the process. If they are regenerated in the process, the calcining condition for them could not be well controlled and coke removal from them could not be attained uniformly. As the case may be, if so, the catalysts will undergo local and abnormal heating when calcined, thereby often causing aggregation of the active metallic components constituting them. In addition, the calcined catalysts could not be washed uniformly, and, after all, the capabilities of the regenerated catalysts will be poor. It is desirable that the condition under which the used catalysts are calcined and the condition under which the calcined catalysts are subjected to the next metallic deposit removal treatment of, for example, washing them with water are suitably settled in the manner to be mentioned below, depending on the condition of the used catalysts.

First described is the calcining step.

The used catalyst may be directly calcined, but, in general, it is desirable that they are first washed with a solvent in or to make them easily handlable. For the solvent, preferred are toluene, acetone, alcohol, as well as petroleums such as naphtha, kerosene, gas oil, etc. Also usable are any others capable of readily dissolving reactants-derived organic deposits on the used catalysts. For example, while the used catalysts are still in a hydrogenation reactor, gas oil will be circulated in the reactor to wash them, and thereafter nitrogen gas or the like will be circulated therein at 50 to 200°C or so to dry them. In that manner, the used catalysts could be substantially washed with gas oil. Alternatively, the used catalysts having been thus washed with the circulating gas oil may be taken out of the reactor, and kept wetted with the gas oil so as to prevent them from heating up or from spontaneously calcining, and they will be dried when necessary. As the case may be, lumps of the used catalysts taken out of the reactor are ground, or powdery fractions, scale and others are removed from the catalysts, for example, by sieving them, arid the thus-processed catalysts are washed with gas oil and then with naphtha. In that manner, the catalysts are made easily dryable. When the amount of the catalysts is small, they are preferably washed with toluene to completely remove oil from them.

Even though the catalysts are washed with a solvent to remove oil and impurities therefrom, many carbonaceous deposits on them could not be removed. Therefore, the catalysts must be calcined to remove the carbonaceous deposits from them. In general, they are calcined through oxidation, for which the ambient temperature and the oxygen concentration are controlled. If the calcining temperature is too high, or if the oxygen concentration is too high, the surface temperature of the catalysts will be too high. If so, the crystallographic morphology and even the condition of the active metallic ingredients of the catalysts will change or the pores of the catalyst carrier will decrease, whereby the catalyst activity will decrease. On the other hand, if the calcining temperature is too low, or if the oxygen concentration is too low, the carbonaceous deposits on the catalysts could not be fully burned away and the regenerated catalysts could not fully recover their activity. Preferably, the calcining temperature falls between 350 and 700°C, more preferably between 400 and 600°C.

The oxygen concentration is preferably controlled to fall between 1 and 21 %. More preferably, however, it is controlled depending on the calcining mode employed, especially on the condition under which the catalysts are contacted with the calcining gas. More importantly, the calcining temperature, the oxygen concentration and the flow rate of the ambient gas are suitably settled so as to control the surface temperature of the catalysts, whereby the specific surface area and the pore volume of the regenerated catalysts are prevented from being reduced, and the crystallographic structure and also the condition of the crystal particles of the hydrogenation active metals of nickel, molybdenum and others originally existing in the catalysts are prevented from being changed.

Preferably, the carbon content of the calcined catalysts is at most 15 %, more preferably at most 10 %. (The carbon content of the catalyst referred to herein is based on the weight of the catalyst having been oxidized at a temperature not lower than 400°C until it shows no more weight loss, and is given in terms of % by weight of carbon in the catalyst. The same shall apply hereinunder.) Most used catalysts have a carbon content of from 10 to 70 % or so, and their carbon content can be reduced through the regeneration treatment of calcining to remove the carbonaceous deposits from them. During this treatment, sulfur (S) deposits and other impurities capable of being removed by calcining are also removed. The activity of used catalysts having a large carbon content is low and the effect of washing them with water is poor, as their surfaces are much covered with carbonaceous deposits. Reducing the carbon content of such used catalysts by calcining them recovers their activity. The carbon content and the sulfur content of the catalysts are measured with a C and S analyzer.

The calcining treatment for catalyst regeneration is accompanied by oxidation of catalysts, generally by combustion thereof. During the treatment, therefore, the catalyst surface is often overheated whereby the pore structures of the treated catalysts will be changed and the condition of the active metals originally carried in the catalysts will be also changed. As a result, the catalyst activity will be often lowered. The specific surface area and the pore volume of the regenerated catalysts may be the factors indicating their catalytic activity, and based on these, the activity of the regenerated catalysts can be evaluated. The specific surface area and the pore volume of catalysts gradually decrease while the catalysts are used for hydrogenation, since some impurities adhere to the used catalysts and since the catalysts are degraded by heat during the reaction. For the regenerated catalysts obtained in the invention, it is desirable that their specific surface area and pore volume are both still at least 70 % of the initial values of the fresh catalysts. For the concrete physical data of the regenerated catalysts, it is desirable that their specific surface area falls between 60 and 200 m²/g, more preferably between 100 and 200 m²/g, and their pore volume falls between 0.3 and 1.0 cc/g. These data are obtained through nitrogen absorption.

Next described is the step of removing metallic deposits of vanadium, nickel and others on the calcined catalysts. To remove the deposits, for example, the calcined catalysts are washed with water.

Vanadium is not in the catalysts, but is derived from minor impurities in crude oil to be hydrogenated. Therefore, the vanadium content of used catalysts could be one factor indicating the degree of degradation of the used catalysts. Of the regenerated catalysts obtained in the invention, the vanadium content is preferably at most 35 %, more preferably at most 15 %, even more preferably at most 10 %. (In this connection, the metal content of the catalyst referred to herein is based on the weight of the catalyst having been oxidized at a temperature not lower than 400°C until it shows no more weight loss, and is given in terms of % by weight of the metal in the form of its oxide in the catalyst. The same shall apply to the content of other metals in catalysts.) If the vanadium content of the regenerated catalysts is larger than 35 %, the activity thereof will be too low to satisfactorily attain hydrogenation. For elementary analysis for vanadium, the sample to be analyzed is calcined at 650°C for 1 hour, the resulting ash is dissolved in an acid, and the resulting solution is analyzed through inductively-coupled plasma emission absorptiometry.

To remove the metal deposits of vanadium and others from the calcined catalysts, any method is employable. One simple and effective method for it is to wash the calcined catalysts with water. In the method, it is desirable that the catalysts are efficiently contacted with the washing water. To achieve it, the temperature of the washing water is elevated to increase the solubility of vanadium in water. To that effect, it is desirable that the temperature of the washing water is not lower than 15°C, more preferably not lower than 30°C. The uppermost limit of the temperature of the washing water is not specifically defined, but the washing treatment will be impossible under the condition under which the washing water changes into vapor. If high-temperature washing is desired, the pressure for the treatment shall be increased. Under increased pressure, the washing treatment could be well effected even at temperatures of 100°C and higher so far as the washing water could be liquid.

To increase the washing efficiency, it is desirable to control the pH of the washing water. For this, in general, the pH of the washing water is controlled to fall between 1 and 11, more preferably between 2 and 9. When the used catalysts are calcined and then washed in pure water, the pH of the washing water will often be lower than 7 owing to the influence thereon of vanadium and others existing in the catalysts. For example, the pH of the washing water could favorably fall between 2 and 5 or so. Within the preferred pH range, the metallic deposits of vanadium, nickel and others can be extracted and removed away from the catalysts, but the active metals of molybdenum and others originally existing in the catalysts hardly dissolve in the washing water. However, it is desirable that the pH of the washing water is not lowered too much. On the other hand, it is desirable that the pH of the washing water is not too high in order to prevent molybdenum from dissolving in the washing water. Processing the catalysts with alcohol or oxalic acid to extract and remove the metallic deposits of vanadium, nickel and others from them is not preferred, since molybdenum will form a complex with the organic acid used and the resulting molybdenum complex easily dissolves in the extractant. Therefore, it is undesirable to drastically change the pH of the washing water by adding acid or alkali thereto, or to add complex-forming substances to the washing water. Acids usable for controlling the pH of the washing water may be sulfuric acid, hydrochloric acid, nitric acid, phosphoric acid, acetic acid, malic acid and the like. Of those, especially preferred is sulfuric acid. If desired, alkalis such as sodium hydroxide, ammonia or amines, or salts such as ammonium phosphate and the like may be added to the washing water. In this case, the washing water could be a buffer solution. The alkali concentration in the buffer solution preferably falls between 1 and 50 % by weight. If it is lower than 1 % by weight, the buffer solution will lose the effect of removing vanadium (V); but if larger than 50 % by weight, molybdenum and alumina will dissolve in the buffer solution, and it is unfavorable, Of the alkalis mentioned above, preferred is sodium hydroxide. When the alkali is added to the washing water, it is desirable to pay much attention to the relationship between the solubility in the resulting alkaline water of the metallic deposits of vanadium and others to be removed and the solubility therein of the active metallic ingredients such as molybdenum and others not to be removed. Oxalic acid should not be added to the washing water, since it forms a complex with molybdenum, as so mentioned hereinabove, thereby to promote the dissolution of molybdenum.

Concretely, the calcined catalysts to be washed are dipped in water, or running water is applied thereto. Preferably, the washing system with the catalysts therein is agitated. However, agitating it too much is undesirable, since the catalysts will be broken or worn. This is because the regenerated catalysts, if broken or worn, are difficult to handle when they are reused. Agitating the washing system may be effected by the use of an ordinary stirrer. For preventing the catalysts from being broken or worn, more preferred is bubble jet washing or ultrasonic washing. The two methods may be combined. The washing time may be suitably determined, depending on the washing method and on the temperature and the pH of the washing water. The washing operation may be stopped after the vanadium content of the washed catalysts has reduced to the desired level. In general, the washing time may fall between 1 and 60 minutes.

The ratio of the washing water to the catalyst may be determined, depending on the washing method. In general, the washing water to be used may fall between 2 and 500 liters/kg of the catalyst. If the used catalyst has a large amount of metallic deposits thereon, the amount of the washing water is preferably increased. However, using too much water for washing is undesirable, as often increasing the amount of waste water to be drained. The washed catalysts are dried generally at a temperature falling between 50 and 120°C, and then reused as regenerated catalysts.

It is desirable that the washed catalysts are screened through sieving or the like to remove powdery fine grains and others, thereby selecting only the normally-shaped grains from them for regenerated catalysts. If not screened, the catalyst layer in a reactor will be clogged with the oil flow running therethrough or the oil flow will be undesirably channeled through the catalyst layer, whereby the flow pressure loss in the reactor will increase and it would become impossible to smoothly drive the reaction system in the reactor, even though the initial activity of the regenerated catalysts could be high to a satisfactory degree.

Heavy oil which may be hydrogenated with the regenerated catalysts of the invention generally has a sulfur content of 1 % by weight or more, a nitrogen content of 200 ppm by weight or more, a residual carbonaceous content of 5 % by weight or more, a vanadium content of 5 ppm or more, and an asphaltene content of 0.5 % or more. Concretely, the regenerated catalysts obtained in the invention are favorable to hydrogenation of atmospheric residue, vacuum residue and others from various types of crude oil, and also to hydrogenation of crude oil, asphalt oil, thermally-cracked oil, tar-sand oil, and even mixed oil comprising them.

Fresh and unused catalysts are those prepared for hydrogenation of hydrocarbon oils, preferably for heavy oil, and those prepared for hydrogenation of heavy oil and having the capabilities of desulfurization, metal removal, cracking and the like and additionally denitrogenation. They may be ordinary, commercially available hydro-desulfurization catalysts, hydrogenating and metal-removing catalysts, etc. As the case may be, they may be catalysts specifically prepared to have the function of hydrogenation.

The fresh catalysts include not only those not used anywhere for hydrogenation but also those having been once used for hydrogenation with using them being stopped within a short period of time due to machine trouble or the like, and therefore capable of being again used directly as they are. For the latter, even the catalysts having been once used only within a short period of time are within the scope of the fresh catalysts, so far as they still have the original hydrogenation activity without being specifically processed for reactivation.

For their basic constitution, preferred are catalyst compositions comprising a metal oxide with molybdenum, tungsten, cobalt (Co) or nickel carried on art oxide carrier of, for example, alumina, alumina-phosphorus, alumina-boron, alumina-silicon or the like. Of those, more preferred are catalysts of nickel/molybdenum carried on an alumina carrier; catalysts of nickel/molybdenum carried on an alumina-phosphorus carrier; catalysts of cobalt/molybdenum carried on an alumina-boron carrier; and catalysts of nickel/molybdenum carried on an alumina-silicon carrier. In addition, since the catalysts are for processing heavy oil, it is also desirable that they contain the carried metal, cobalt or nickel, in an amount of from 0.1 to 10 % (this is in terms of % by weight of the metal oxide relative to the regenerated catalyst containing the metal, and the same shall apply hereinunder), and contain molybdenum in an amount of from 0.2 to 25 %. The phosphorus content of the catalysts preferably falls between 0.1 and 15 % (to this, the same to the active metal content as above shall apply). For elementary analysis for molybdenum and others, the sample to be analyzed is calcined at 650°C for 1 hour. For Mo and P, the resulting ash is dissolved in an acid and the resulting solution is analyzed through inductively-coupled plasma emission absorptiometry; and for Co and Ni, the ash is mixed with lithium tetraborate, the resulting mixture is formed into glass beads under high-frequency heat, and the glass beads are analyzed through fluorescent X-ray spectrometry.

One embodiment of the invention for hydrogenating hydrocarbon oils is described concretely. The reaction conditions for this are not specifically defined, so far as the regenerated catalysts are used therein. General conditions for this embodiment are described. Regarding the catalyst disposition, the regenerated catalyst may be used throughout in the reaction system, but, as the case may be, the regenerated catalyst may be in a part of the reaction system and a fresh catalyst may be in the remaining part thereof. For example, a fresh catalyst for metal removal is disposed in the metal removal zone, and a fresh catalyst for desulfurization and denitrogenation is in the former half stage, 50 %, of the desulfurization and denitrogenation zone while the regenerated catalyst for desulfurization and denitrogenation is in the latter half stage, 50 %, thereof. The hydrocarbon oil to be processed herein may be any one mentioned above, but is preferably atmospheric residue. Regarding the reaction conditions for it, the reaction temperature may fall generally between 300 and 450°C, but preferably between 350 and 420°C; the hydrogen partial pressure may fall generally between 7.0 and 25.0 Pa, but preferably between 10.0 and 15.0 Pa; the liquid hourly space velocity may fall generally between 0.01 and 10 hrs⁻¹, but preferably between 0.1 and 5 hrs⁻¹; and the ratio of hydrogen/feed oil may fall generally between 500 and 2500 Nm³/kl, but preferably between 500 and 2000 Nm³/kl.

To control the sulfur content, the nitrogen content and the metal content (nickel, vanadium) of the processed oil, the necessary factors of the reaction conditions noted above, for example, the reaction temperature may be suitably varied. According to the hydrocarbon oil processing method of the invention as above, used catalysts which have heretofore been considered useless can be effectively recycled for hydrogenation of residual oil, etc.

The invention is described more concretely with reference to the following Examples, which, however, are not intended to restrict the scope of the invention.

### [Example 1]

### (1) Preparation of fresh catalyst:

630 g of molybdenum oxide and 150 g, in terms of NiO, of nickel carbonate were dissolved in ion-exchanged water along with malic acid. The dipping liquid thus prepared had a total volume of 2000 ml. Its water content was controlled in accordance with the pore volume of the carrier to be dipped in the liquid. The carrier is a four-leaves alumina carrier having a specific surface area of 230 m²/g, a mean pore size of 120 Å and a pore volume of 0.69 ml/g. 4000 g of the carrier was dipped in the liquid. This was dried at 120°C for 3 hours, and then baked at 500°C for 5 hours to prepare a fresh catalyst.

### (2) Preparation of used catalyst:

The fresh catalyst prepared in the previous (1) was filled in a residual oil hydro-desulfurization reactor, into which was applied atmospheric residue from the Middle East, for 8000 hours. Hydro-desulfurizing the residual oil was continued while the reaction temperature was so monitored that the sulfur content of the essential fraction (distillate having a boiling point of not lower than 343°C) of the processed oil could be stabilized on a constant level. This is to prepare a used catalyst from the fresh catalyst. Typical properties of the atmospheric residue processed herein are given in Table 1; and the reaction conditions for desulfurization are in Table 2.

### (3) Preparation of calcined catalyst:

The used catalyst was taken out of the reactor, well washed with toluene, and then dried (this is referred to as a toluene-washed catalyst). The toluene-washed catalyst was oxidized in air at 500°C for 3 hours, whereby the carbonaceous deposits and the like were removed from it (the resulting catalyst is referred to as a calcined catalyst). The composition and the physical properties of the fresh catalyst, the toluene-washed catalyst and the calcined catalyst are given in Table 3.

### (4) Preparation of regenerated catalyst:

300 cc of water was put into a 500-cc beaker, to which was added 100 g of the calcined catalyst that had been prepared in the previous (3). While kept at 80°C, this was stirred with a stirrer at 30 rpm for 30 minutes, and the catalyst was thus washed. During the stirring washing operation, the system had a pH of 3.2. After having been thus washed, the catalyst was taken out through filtration, and then dried at 120°C for 3 hours. The regenerated catalyst thus prepared is referred to as regenerated catalyst 1. Its composition and physical properties are given in Table 3.

### (5) Evaluation of hydrogenation activity of regenerated catalyst:

100 cc of the regenerated catalyst 1 was filled in a small-sized, high-pressure fixed-bed reactor (capacity: 200 cc). Through the reactor, first passed was light gas oil (its sulfur content was controlled to be 2.5 % by adding thereto a sulfurizing agent, dimethyldisulfide), at a flow rate of 135 kg/cm³ of hydrogen at 250°C for 24 hours for pre-sulfurization. Next, the atmospheric residue mentioned above was passed through it for hydrogenation. The reaction conditions are given in Table 6; and the properties of the hydrogenated oil are in Table 7.

### [Example 2]

A regenerated catalyst 2 was prepared in the same manner as in Example 1, except for the step (4). In this, the calcined catalyst in the beaker was not stirred but was bubbled with air having been introduced into the beaker through its bottom at a flow rate of 10 liter/min (bubble jet washing). Also in the same manner as in Example 1, the regenerated catalyst 2 was tested for oil hydrogenation. The composition and the physical properties of the regenerated catalyst 2 are given in Table 4; and the properties of the hydrogenated oil are in Table 7.

### [Example 3]

A regenerated catalyst 3 was prepared in the same manner as in Example 1, except for the step (4) of stirring the calcined catalyst in the 500-cc beaker. In this, the calcined catalyst was put into an ultrasonic washer having a capacity of about 500 cc, along with water, and was ultrasonically washed with water therein but not stirred with a stirrer. Also in the same manner as in Example 1, the regenerated catalyst 3 was tested for oil hydrogenation. The composition and the physical properties of the regenerated catalyst 3 are given in Table 4; and the properties of the hydrogenated oil are in Table 7.

### [Example 4]

A regenerated catalyst 4 was prepared in the same manner as in Example 1, except for the step (4). In this, the calcined catalyst in the 500-cc beaker was stirred at 60°C but not at 10°C. Also in the same manner as in Example 1, the regenerated catalyst 4 was tested for oil hydrogenation. The composition and the physical properties of the regenerated catalyst 4 are given in Table 4; and the properties of the hydrogenated oil are in Table 7.

### [Example 5]

A regenerated catalyst 5 was prepared in the same manner as in Example 1, except for the step (4). In this, sodium hydroxide was added to the washing water in the 500-cc beaker so that the calcined catalyst therein could be stirred and washed at a pH of 10. Also in the same manner as in Example 1, the regenerated catalyst 5 was tested for oil hydrogenation. The composition and the physical properties of the regenerated catalyst 5 are given in Table 4; and the properties of the hydrogenated oil are in Table 7.

### [Example 6]

250 cc of an aqueous solution of diluted 17.5 wt.% sulfuric acid was put into a 500-cc beaker, to which was added 50 g of the calcined catalyst that had been prepared in (3) in Example 1. While kept at 50°C, this was stirred with a stirrer at 30 rpm for 2 hours, and the catalyst was thus washed. During the stirring washing operation, the system had a pH of 1.4. After having been thus washed, the catalyst was taken out through filtration, and then dried at 120°C for 3 hours. The regenerated catalyst thus prepared is referred to as regenerated catalyst 6. Its composition and physical properties are given in Table 4; and the properties of the oil having been hydrogenated with it are in Table 7.

### [Comparative Example 1]

The calcined catalyst prepared in (3) in Example 1 was directly subjected to oil hydrogenation as in (5) in Example 1. In this, the step of washing the calcined catalyst as in (4) in Example 1 was omitted. The composition and the physical properties of the calcined catalyst are given in Table 5; and the properties of the hydrogenated oil are in Table 7.

### [Comparative Example 2]

The calcined catalyst prepared in (3) after (2) in Example 1 was put into a 500-cc beaker, along with 300 cc of water to which had been added 10 g of oxalic acid. This step differs from (4) in Example 1. While kept at 60°C, this was stirred with a stirrer at 30 rpm for 30 minutes, and the catalyst was thus washed. After having been thus washed, the catalyst was taken out through filtration, and then dried at 120°C for 3 hours. The regenerated catalyst thus prepared is referred to as regenerated catalyst 7. Its composition and physical properties are given in Table 5. The regenerated catalyst 7 was tested for oil hydrogenation in the same manner as in (5) in Example 1. The properties of the hydrogenated oil are given in Table 7.

### [Comparative Example 3]

The toluene-washed catalyst prepared in (3) in Example 1 was directly washed as in (4) in Example 1. In this, the toluene-washed catalyst was not oxidized, being different from that processed in (3) in Example 1. The regenerated catalyst thus prepared is referred to as regenerated catalyst 8. Its composition and physical properties are given in Table 5. The regenerated catalyst 8 was tested for oil hydrogenation in the same manner as in (5) in Example 1. The properties of the hydrogenated oil are given in Table 7.

### [Comparative Example 4]

250 cc of an aqueous solution of diluted 17.5 wt.% sulfuric acid was put into a 500-cc beaker, to which was added 50 g of the toluene-washed catalyst prepared in (3) in Example 1. While kept at 50°C, this was stirred with a stirrer at 30 rpm for 2 hours, and the catalyst was thus washed. During the stirring washing operation, the system had a pH of 2.2. After having been thus washed, the catalyst was taken out through filtration, and then dried at 500°C for 3 hours. The regenerated catalyst thus prepared is referred to as regenerated catalyst 9. Its composition and physical properties are given in Table 5; and the properties of the oil having been hydrogenated with it are given in Table 7.

**Table 1**

| Properties of atmospheric residue | | |
|---|---|---|
| Items Measured | Atmospheric residue | Method for Measurement |
| Density (15°C, g/cm³) | 0.962 | JIS K-2249 |
| Viscosity (50°C, cSt) | 290 | JIS K-2283 |
| Micro Coke Residue (wt.%) | 9.33 | JIS K-2270 |
| Asphaltene (wt.%) | 2.98 | IP 143 |
| Impurity Content (by weight) | | |
| Sulfur Content (%) | 3.48 | JIS K-2541 |
| Nitrogen Content (ppm) | 1840 | JIS K-2609 |
| Vanadium Content (ppm) | 37.6 | JPI-5S-10-79 |
| Nickel Content (ppm) | 10.8 | JPI-5S-11-79 |
| Distillation (% by volume) | | JIS K-2254 |
| up to 340°C | 6.2 | |
| from 340 to 525°C | 46.2 | |
| over 525°C | 47.6 | |

**Table 2**

| Hydrogenation condition for preparing used catalyst | |
|---|---|
| Starting Oil | atmospheric residue |
| Hydrogen Partial Pressure (kg/cm²) | 130 |
| Liquid Hourly Space Velocity (/hr) | 0.3 |
| Ratio of Hydrogen/Oil (Nm³/kl) | 850 |
| Sulfur Content of Main Fraction of Product Oil (wt.%) | 0.3 |
| Reaction Time (hr) | 8000 |

**Table 3**

| Composition and physical properties of catalysts | | | | |
|---|---|---|---|---|
| Example No. | Example 1 | Example 1 | Example 1 | Example 1 |
| Type of Catalyst | Fresh Catalyst | Toluene-washed Catalyst | Calcined Catalyst | Regenerated Catalyst 1 |
| Carrier | alumina | alumina | alumina | alumina |
| Metal Content (wt.%) | | | | |
| molybdenum | 8.7 | 8.2 | 8.1 | 8.2 |
| nickel | 2.3 | 3.2 | 3.2 | 2.9 |
| vanadium | - | 7.4 | 7.4 | 4.9 |
| Carbon Content (wt.%) | - | 28.3 | 1.0 | 1.1 |
| Pore Structure | | | | |
| Specific Surface Area (m²/g) | 197 | 96 | 167 | 170 |
| Pore Volume (cc/g) | 0.6 | 0.25 | 0.52 | 0.54 |

**Table 4**

| Composition and physical properties of catalysts | | | | | |
|---|---|---|---|---|---|
| Example No. | Example 2 | Example 3 | Example 4 | Example 5 | Example 6 |
| Type of Catalyst | Regenerated Catalyst 2 | Regenerated Catalyst 3 | Regenerated Catalyst 4 | Regenerated Catalyst 5 | Regenerated Catalyst 6 |
| Carrier | alumina | alumina | alumina | alumina | alumina |
| Metal Content (wt.%) | | | | | |
| molybdenum | 8.1 | 8.2 | 8.2 | 5.1 | 7.2 |
| nickel | 2.6 | 2.7 | 2.5 | 2.9 | 2.4 |
| vanadium | 4.3 | 4.5 | 6.3 | 6.5 | 1.2 |
| Carbon Content (wt.%) | 1.0 | 1.1 | 1.0 | 1.1 | 1.0 |
| Pore Structure | | | | | |
| Specific Surface Area (m²/g) | 172 | 168 | 158 | 174 | 180 |
| Pore Volume (cc/g) | 0.55 | 0.54 | 0.56 | 0.53 | 0.55 |

**Table 5**

| Composition and physical properties of catalysts | | | | |
|---|---|---|---|---|
| Example No. | Comp. Ex. 1 | Comp. Ex. 2 | Comp. Ex. 3 | Comp. Ex. 4 |
| Type of Catalyst | Calcined Catalyst | Regenerated Catalyst 7 | Regenerated Catalyst 8 | Regenerated Catalyst 9 |
| Carrier | alumina | alumina | alumina | alumina |
| Metal Content (wt.%) | | | | |
| molybdenum | 8.1 | 4.3 | 8.1 | 8.1 |
| nickel | 3.2 | 1.9 | 3.1 | 3.2 |
| vanadium | 7.4 | 3.8 | 7.4 | 7.1 |
| Carbon Content (wt.%) | 1.0 | 1.0 | 27.0 | 0.9 |
| Pore Structure | | | | |
| Specific Surface Area (m²/g) | 167 | 170 | 98 | 162 |
| Pore Volume (cc/g) | 0.52 | 0.55 | 0.27 | 0.51 |

**Table 6**

| Condition for hydrogenation | |
|---|---|
| Starting Oil | Atmospheric residue |
| Reaction Temperature (°C) | 370 |
| Hydrogen Partial Pressure (kg/cm²) | 135 |
| Liquid Hourly Space Velocity (/hr) | 0.3 |
| Ratio of Hydrogen/Oil (Nm³/kl) | 850 |
| Reaction Time (hr) | 1000 |

**Table 7**

| Properties of processed oil | | | |
|---|---|---|---|
| Items Measured | Sulfur Content (% by weight) | Nitrogen Content (ppm by weight) | Metal Content (V + Ni) (ppm by weight) |
| Starting Oil (atmospheric residue) | 3.48 | 1840 | 48 |
| Example 1 | 0.42 | 780 | 14 |
| Example 2 | 0.40 | 780 | 12 |
| Example 3 | 0.41 | 770 | 15 |
| Example 4 | 0.54 | 890 | 21 |
| Example 5 | 0.88 | 1170 | 28 |
| Example 6 | 0.35 | 540 | 10 |
| Comparative Example 1 | 0.67 | 920 | 33 |
| Comparative Example 2 | 0.93 | 1410 | 38 |
| Comparative Example 3 | 1.78 | 1570 | 40 |
| Comparative Example 4 | 0.85 | 930 | 35 |

### INDUSTRIAL APPLICABILITY

According to the method of regenerating used catalysts of the invention, carbonaceous deposits and unnecessary metallic deposits of vanadium and others on used catalysts can be selectively removed, and the regenerated catalysts can recover their hydrogenation activity. It is understood that the method of the invention is excellent and favorable for recycling used catalysts.

## Claims

1. A method of regenerating hydrogenation catalysts having been used in a process of hydrogenating hydrocarbon oils, which comprises calcining the used catalysts, followed by subjecting them to treatment for removing metallic deposits from them.

2. The method of regenerating used hydrogenation catalysts as claimed in claim 1, which comprises calcining them outside the hydrogenation process, followed by subjecting them to the metallic deposit removal treatment.

3. The method of regenerating used hydrogenation catalysts as claimed in claim 1, in which the metallic deposit removal treatment is for removing vanadium and/or nickel from the calcined catalysts.

4. The method of regenerating used hydrogenation catalysts as claimed in claim 1, in which the calcined catalysts are washed with water for the metallic deposit removal treatment.

5. The method of regenerating used hydrogenation catalysts as claimed in claim 4, in which the temperature of water for the washing treatment is not lower than 15°C.

6. The method of regenerating used hydrogenation catalysts as claimed in claim 4, in which the pH of water for the washing treatment falls between 1 and 11.

7. The method of regenerating used hydrogenation catalysts as claimed in claim 6, in which the pH of water for the washing treatment is controlled by acid or alkali.

8. The method of regenerating used hydrogenation catalysts as claimed in claim 7, in which the acid is sulfuric acid.

9. The method of regenerating used hydrogenation catalysts as claimed in claim 1, in which the calcined catalysts are agitated in a washing liquid for the metallic deposit removal treatment.

10. The method of regenerating used hydrogenation catalysts as claimed in claim 9, in which the washing treatment with agitation is conducted by a bubbling wash.

11. The method of regenerating used hydrogenation catalysts as claimed in claim 9, in which the agitation is conducted by ultrasonic waves.

12. The method of regenerating used hydrogenation catalysts as claimed in claim 3, in which the amount of water to be applied to the calcined catalysts for washing them falls between 2 and 500 liters/kg of the catalysts.

13. The method of regenerating used hydrogenation catalysts as claimed in claim 1, in which the used catalysts are calcined at a temperature falling between 350 and 700°C.

14. A method of hydrogenating hydrocarbon oils, in which are used the hydrogenation catalysts having been regenerated according to the method of any of claims 1 to 13.
